# EUROPÄISCHE PATENTANMELDUNG

(11) **EP 1 637 392 A2**
(43) Veröffentlichungstag der Anmeldung: **22.03.2006**
(21) Anmeldenummer: 05020352.0
(22) Anmeldetag: 19.09.2005
(51) Int. Cl.: B60P 1/28

(54) **Lastentransportbehälter und Verfahren zur Herstellung von Laderaumbegrenzungsblechen für Lastentransportbehälter**

(30) Priorität: 20.09.2004 DE 102004045473
(71) Anmelder: Franz Xaver Meiller Fahrzeug- und Maschinenfabrik-GmbH & Co KG, 80997 München (DE)
(72) Erfinder: Meissner, Uwe, 85560 Ebersberg (DE)
(74) Vertreter: Tiesmeyer, Johannes

(57) **Zusammenfassung**

Gegenstand der Erfindung ist ein Lastentransportbehälter für ein Lastentransportfahrzeug, der Laderaumbegrenzungsbleche aufweist, etwa ein Bodenblech und Seitenwandbleche. Der Lastentransportbehälter ist dadurch gekennzeichnet, dass zumindest eines der Laderaumbegrenzungsbleche wenigstens partiell aus einem Schichtenverbund mit einer Basisschicht (1) aus einem insbesondere zähelastischen Material, vorzugsweise Baustahl, und einer Verschleißschutzschicht (2) aus einem Hartstoff besteht.

## Beschreibung

Die Erfindung betrifft einen Lastentransportbehälter für ein Lastentransportfahrzeug, wobei der Lastentransportbehälter Laderaumbegrenzungsbleche aufweist. Die Erfindung betrifft ferner Verfahren zur Herstellung eines Laderaumbegrenzungsbleches für einen solchen Lastentransportbehälter.

Lastentransportbehälter der hier betrachteten Art werden üblicherweise für den Transport schwerer Lasten verwendet. Ein Beispiel für einen solchen Lastentransportbehälter ist eine Kippbrücke eines Kipperfahrzeugs für den Transport von schwerem Schüttgut, etwa Bauschutt, Sand, Kies oder dgl. Die Laderaumbegrenzungsbleche eines solchen Lastentransportbehälters, also z.B. das Bodenblech und die Seitenwände einer Kippbrücke, sind insbesondere beim Entladen und beim Beladen starken Reibungsbelastungen ausgesetzt, was mit einer erhöhten Verschleißbeanspruchung an der laderaumseitigen Fläche dieser Laderaumbegrenzungsbleche einhergeht.

Bisher war es üblich, zur Herstellung von Bodenblechen und Seitenwandblechen für Lastentransportbehälter zähelastische, schweißbare Baustahlbleche, z.B. ST37-2-Bleche, zu verwenden, die hinsichtlich ihrer Blechdicke um ein Verschleißmaß "überdimensioniert" sind. Das Verschleißmaß ist so gewählt, dass durch den üblichen Abrieb des Blechmaterials während der üblichen Lebensdauer des Lastentransportbehälters bei normaler Verwendung die für die strukturelle Festigkeit und Formhaltigkeit erforderliche Mindestblechdicke nicht unterschritten wird. Dieses Sicherheitsmaß an Blechdicke bedeutet jedoch den Nachteil, dass die Laderaumbegrenzungsbleche und somit der damit ausgerüstete Lastentransportbehälter das betreffende Lastentransportfahrzeug mit relativ großem Gewicht belasten.

Der Erfindung liegt die Aufgabe zugrunde, einen Lastentransportbehälter für ein Lastentransportfahrzeug bereitzustellen, welcher bei relativ geringem Gewicht ein gutes Verschleißverhalten aufweist.

Zur Lösung dieser Aufgabe wird gemäß Anspruch 1 ein Lastentransportbehälter für ein Lastentransportfahrzeug vorgeschlagen, der Laderaumbegrenzungsbleche aufweist, von denen wenigstens eines, insbesondere das Bodenblech, wenigstens partiell aus einem Schichtenverbundmaterial mit einer Basisschicht aus einem insbesondere zähelastischen Material und einer Verschleißschutzschicht aus einem Hartstoff besteht.

Der Erfindung liegt die Idee zugrunde, dass das Verschleißmaß bei der Blechdickendimensionierung wesentlich herabgesetzt werden kann, wenn das Laderaumbegrenzungsblech als Schichtenverbundblech realisiert wird, bei dem die der erhöhten Verschleißbelastung ausgesetzte Laderaumbegrenzungsseite von einer Verschleißschutzschicht aus einem Material mit erhöhtem Abrasionswiderstand im Vergleich mit dem Basisschichtmaterial realisiert wird. Das Basisschichtmaterial sollte ein schweißbares Material sein, da üblicherweise mehrere Laderaumbegrenzungsbleche zu einer größeren Wandeinheit durch Schweißen zusammengefügt werden oder/und Rahmenteile oder Aussteifungsteile durch Schweißen mit den Laderaumbegrenzungsblechen verbunden werden. Die Basisschicht kann so z.B. aus einem allgemeinen Baustahl, etwa ST37-2 oder dgl., bestehen, wie er auch bisher schon für die Herstellung von Kippbrücken oder sonstigen Lastentransportbehältern für Lastentransportfahrzeuge verwendet wurde. Die Dicke der Basisschicht kann im Wesentlichen auf das Maß begrenzt werden, das für die strukturelle Festigkeit und Formhaltigkeit des Laderaumbegrenzungsbleches bei üblicher Verwendung des damit hergestellten Lastentransportbehälters erforderlich ist. Die Verschleißschutzschicht aus dem Material mit erhöhtem Abriebwiderstand kann im Vergleich damit und insbesondere im Vergleich mit der Verschleißmaßdicke konventioneller Stahlbleche für den Lastentransportbehälterbau erheblich dünner sein, so dass der mit Laderaumbegrenzungsblechen nach der Erfindung hergestellte Lastentransportbehälter mit geringerem Gewicht realisiert werden kann als vergleichbare Lastentransportbehälter konventioneller Art.

Vorteilhafte Weiterbildungen des Lastentransportbehälters nach der Erfindung sind in den Unteransprüchen 2 - 11 angegeben.

Gegenstand der Erfindung ist auch ein Verfahren zur Herstellung eines Laderaumbegrenzungsbleches eines Lastentransportbehälters für ein Lastentransportfahrzeug. Das Verfahren umfasst die Schritte des Zuschneidens und/oder Vorformens eines zähelastischen Blechmaterials, insbesondere eines Baustahlblechs, so dass es im Wesentlichen die Gestalt des herzustellenden Laderaumbegrenzungsbleches annimmt, wobei nach diesem Schritt des Zuschneidens oder/und Vorformens das so präparierte Blech mit einer Verschleißschutzschicht versehen wird. Das Verfahren eignet sich insbesondere zum Einsatz bei der Herstellung eines Lastentransportbehälters nach einem der Ansprüche 1 - 8.

Im Rahmen der Erfindung kann es vorgesehen sein, dass die durch Zuschneiden oder/und Vorformen vorpräparierten Blechelemente zunächst die Verschleißschutzschicht erhalten und dann zu Elementen eines Lastentransportbehälters, etwa zu einem armierten Boden, zu Seitenwänden, Vorderwänden oder Rückwänden weiterverarbeitet werden. Dabei werden üblicherweise Rahmenteile, Aussteifungsrippen usw. mit den vorpräparierten Blechen verbunden.

Im Rahmen der Erfindung kann es aber auch vorgesehen sein, dass die Beschichtung des vorpräparierten Blechs erst nach weiteren Schritten der Montage des betreffenden Lastentransportbehälters erfolgt. So kann z.B. die Verschleißschutzbeschichtung des Bodenbleches und ggf. der Seitenwände des Lastentransportbehälters vorgenommen werden, nachdem der Lastentransportbehälteraufbau im Wesentlichen fertiggestellt worden ist. Wie schon erwähnt, kann es sich bei den hier betrachteten Lastentransportbehältern z.B. um Kippbrücken von Kipperfahrzeugen handeln, also etwa um kastenförmige Kippbrücken, Kippbrücken für Muldenkipper, z.B. Halfpipe-Kippbrücken.

Es können verschiedene Methoden zum Aufbringen der Verschleißschutzschicht auf das vorpräparierte Blech zum Einsatz kommen.

So kann die Verschleißschutzschicht durch Materialabscheidung nach der PVD-Methode (physical vapor deposition) oder nach der CVD-Methode (chemical vapor deposition) hergestellt werden. Vorzugsweise wird die Verschleißschutzschicht als Hartstoffschicht aus Nitriden, Boriden oder/und Karbiden wenigstens eines Elementes der Nebengruppen 4-6, insbesondere der Elemente Ti, Cr, W oder/und Zr, auf das präparierte Blech abgeschieden. Besonders geeignete Hartstoffschichten sind Schichten aus TiN, TiCN, CrN, CrBN, CrCN, TiAlN, c-BN oder/und NbN.

Ein weiteres erfindungsgemäß geeignetes Material zur Bildung der Verschleißschutzschicht ist amorphes, diamantähnliches Kohlenstoffmaterial DLC (diamond like carbon).

Weitere erfindungsgemäß geeignete Methoden zur Herstellung der Verschleißschutzschicht nach Vorpräparierung der Laderaumbegrenzungsblechelemente sind galvanische Auftragsverfahren, Schmelztauchverfahren, Metall-Spritzüberzugverfahren, insbesondere Flammspritzverfahren, Lackierverfahren und Diffusionsüberzugverfahren.

Gegenstand der Erfindung ist weiterhin ein Verfahren zur Herstellung eines Laderaumbegrenzungsbleches eines Lastentransportbehälters für ein Lastentransportfahrzeug, wobei das Laderaumbegrenzungsblech aus einem Schichtverbundblechmaterial mit einer zähelastischen Basisschicht und einer Verschleißschutzschicht zugeschnitten oder/und vorgeformt wird. Dieses Verfahren ist somit dadurch gekennzeichnet, dass schon als Rohmaterial ein Schichtverbundblechmaterial eingesetzt wird, wobei das Schichtverbundblechmaterial aus wenigstens zwei flächig, insbesondere durch Plattieren, Aufwalzen oder Verkleben miteinander verbundenen Blechen besteht. Das die Verschleißschutzschicht bildende Blech hat vorzugsweise eine kleinere Blechdicke als das die Basisschicht bildende Blech. Das Basisblech ist vorzugsweise aus einem schweißbaren und kalt verformbarem Baustahl gebildet, etwa ST37-2, und das die Verschleißschutzschicht bildende Blech ist vorzugsweise aus einem hochfesten Verschleißstahl gebildet. Das in den Ansprüchen 19-21 dargelegte Verfahren eignet sich insbesondere zur Herstellung eines Lastentransportbehälters nach einem der Ansprüche 1 und 9 - 11.

Bei allen Verfahrensvarianten der vorstehend genannten Art sollte die Basisschicht des Laderaumbegrenzungsbleches nicht wesentlich dicker gewählt werden, als dies für die strukturelle Festigkeit und Formhaltigkeit im späteren Einsatz erforderlich ist. Die Verschleißschutzschicht sollte so gewählt sein, dass sie erheblich dünner als die Basisschicht ausfällt und dennoch einen großen Abriebwiderstand bildet, so dass das gesamte Laderaumbegrenzungsblech mit einem vergleichsweise geringen Gewicht hergestellt werden kann und dennoch im späteren Einsatz im Lastentransportbehälter eine lange Lebensdauer bietet. Vorzugsweise sollte das Verhältnis der Dicke der Verschleißschutzschicht zur Dicke der Basisschicht kleiner als 1/2, insbesondere als 1/3 sein.

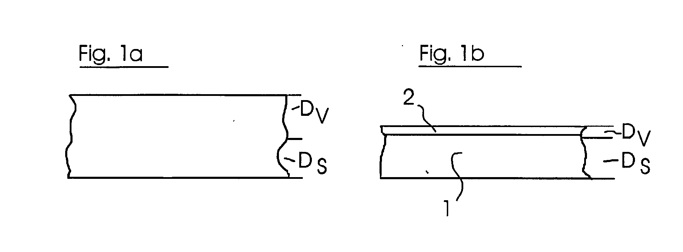

In den Figuren 1a und 1b sind schematisch Blechausschnitte in vergrößerter Schmalseitenansicht gezeigt, wobei Fig. 1a ein herkömmliches Baustahlblech darstellen soll, wie es in herkömmlicher Weise zur Herstellung eines Bodenblechs einer Kippbrücke verwendet wird. Fig. 1b stellt ein Bodenblech eines erfindungsgemäß hergestellten Lastentransportbehälters dar.

Dₛ gibt die für die strukturelle Festigkeit und Formhaltigkeit des Bodenbleches erforderliche Mindestschichtdicke an. Dv gibt das Verschleißmaß an. Dieses Verschleißmaß Dv ist somit eine Sicherheits-Überdimensionierung, welche durch Abrasion während der Lebensdauer des betreffenden Lastentransportbehälters abgetragen werden darf. Bei dem aus einem homogenen Baustahl gefertigten Bodenblech gemäß Fig. 1a nach dem Stand der Technik ist dieses Verschleißmaß Dv relativ groß. Solche Laderaumbegrenzungsbleche und daraus hergestellte Lastentransportbehälter sind daher vergleichsweise schwer und führen somit zu einer starken Gewichtsbelastung des betreffenden Lastentransportfahrzeuges.

Bei der in Fig. 1b skizzierten erfindungsgemäßen Situation besteht das Laderaumbodenblech aus einem Schichtenverbund. Dieser Schichtenverbund umfasst ein Basisblech 1 aus dem gleichen Baustahl wie das Blech gemäß Fig. 1a. In Fig. 1b ist das Verschleißmaß Dv erheblich geringer als in Fig. 1a, weil behälterinnenseitig eine Verschleißschutzschicht aus einem Hartstoff als Schichtenverbundkomponente 2 vorgesehen ist. Eine Verwendung der Bleche gemäß Fig. 1b anstelle von Blechen gemäß Fig. 1 a bei der Herstellung von Lastentransportbehältern führt somit zu einem geringeren Gewicht der betreffenden Lastentransportbehälter, ohne deren Lebensdauer zu beschränken.

Es wird darauf hingewiesen, dass der erfindungsgemäß zum Einsatz kommende Schichtenverbund nicht notwendigerweise ein Zweischichtsystem der bisher beschriebenen Art sein muss, sondern ggf. mehr als zwei Schichten aufweisen kann. Die Basisschicht sollte jedoch vorzugsweise schweißbar und kalt verformbar sein. Aufgrund der geringen Schichtdicke der Verschleißschutzschicht wird diese etwaigen Formgebungen der Basisschicht folgen können, ohne Risse zu bilden oder sich abzulösen. Letzteres ist insbesondere von Bedeutung bei der Verfahrensvariante, gemäß welcher bereits als Rohmaterial ein Schichtenverbund aus flächig miteinander verbundenen Blechen eingesetzt wird, welcher ggf. im Verlauf der Herstellung von Laderaumbegrenzungswänden Umformungsprozessen unterworfen wird.

Wenngleich als Basisschichtmaterial bisher in den Beispielen Stahl genannt wurde, so kommen auch andere Materialien in Frage, z.B. Aluminiumlegierungen.

## Patentansprüche

1. Lastentransportbehälter für ein Lastentransportfahrzeug, wobei der Lastentransportbehälter Laderaumbegrenzungsbleche aufweist,
**dadurch gekennzeichnet,**
**dass** zumindest eines der Laderaumbegrenzungsbleche wenigstens partiell aus einem Schichtenverbund mit einer Basisschicht (1) aus einem insbesondere zähelastischen Material und einer Verschleißschutzschicht (2) aus einem Hartstoff besteht.

2. Lastentransportbehälter nach Anspruch 1, **dadurch gekennzeichnet, dass** das zumindest partiell aus einem Schichtenverbund bestehende Laderaumbegrenzungsblech ein Bodenblech des Lastentransportbehälters ist.

3. Lastentransportbehälter nach Anspruch 1 oder 2, **dadurch gekennzeichnet, dass** die Basisschicht (1) aus einem schweißbaren Material, insbesondere schweißbaren Stahl, besteht.

4. Lastentransportbehälter nach Anspruch 1, 2 oder 3, **dadurch gekennzeichnet, dass** die Verschleißschutzschicht (2) Nitride, Boride oder/und Karbide wenigstens eines Elementes der Nebengruppen 4-6, insbesondere der Elemente Ti, Cr, W oder/und Zr, enthält.

5. Lastentransportbehälter nach einem der vorhergehenden Ansprüche, **dadurch gekennzeichnet, dass** die Verschleißschutzschicht (2) TiN, TiCN, CrN, CrBN, CrCN, TiBN, TIAIN, c-BN oder/und NbN enthält.

6. Lastentransportbehälter nach einem der vorhergehenden Ansprüche, **dadurch gekennzeichnet, dass** die Verschleißschutzschicht (2) ein amorphes, diamantähnliches Kohlenstoffmaterial DLC enthält.

7. Lastentransportbehälter nach einem der vorhergehenden Ansprüche, **dadurch gekennzeichnet, dass** die Verschleißschutzschicht (2) eine nach dem PVD-Verfahren oder nach dem CVD-Verfahren abgeschiedene Schicht ist.

8. Lastentransportbehälter nach einem der vorhergehenden Ansprüche, **dadurch gekennzeichnet, dass** die Verschleißschutzschicht (2) eine nach einem thermischen Spritzverfahren, insbesondere Flammspritzverfahren, hergestellte Schicht ist.

9. Lastentransportbehälter nach einem der vorhergehenden Ansprüche, **dadurch gekennzeichnet, dass** der Schichtenverbund aus wenigstens zwei flächig, insbesondere durch Plattieren, Aufwalzen oder Verkleben miteinander verbundenen Blechen besteht, welche die Basisschicht (1) und die Verschleißschutzschicht (2) bilden.

10. Lastentransportbehälter nach Anspruch 9, **dadurch gekennzeichnet, dass** das die Verschleißschutzschicht (2) bildende Blech ein hochfestes Verschleißblech ist.

11. Lastentransportbehälter nach Anspruch 9 oder 10, **dadurch gekennzeichnet, dass** das Verhältnis der Dicke der Verschleißschutzschicht (2) zur Dicke der Basisschicht (1) kleiner als 1/2, insbesondere kleiner als 1/3 ist.

12. Verfahren zur Herstellung eines Laderaumbegrenzungsbleches eines Lastentransportbehälters für ein Lastentransportfahrzeug, umfassend die Schritte des Zuschneidens und/oder Vorformens eines zähelastischen Blechmaterials, insbesondere eines Baustahlblechs, so dass es im Wesentlichen die Gestalt des herzustellenden Laderaumbegrenzungsbleches annimmt, **dadurch gekennzeichnet, dass** das durch Zuschneiden oder/und Vorformen präparierte Blech (1) mit einer Verschleißschutzschicht (2) versehen wird.

13. Verfahren nach Anspruch 12, **dadurch gekennzeichnet, dass** die Verschleißschutzschicht (2) durch Materialabscheidung nach der PVD-Methode oder nach der CVD-Methode hergestellt wird.

14. Verfahren nach Anspruch 12 oder 13, **dadurch gekennzeichnet, dass** als Verschleißschutzschicht (2) eine Hartstoffschicht aus Nitriden, Boriden oder/und Karbiden wenigstens eines Elementes der Nebengruppen 4-6, insbesondere der Elemente Ti, Cr, W oder/und Zr, auf das präparierte Blech (1) aufgetragen wird.

15. Verfahren nach Anspruch 12, 13 oder 14, **dadurch gekennzeichnet, dass** als Verschleißschutzschicht (2) eine Hartstoffschicht aus TiN, TiCN, CrN, CrBN, CrCN, TiBN, TiAlN, c-BN, oder/und NbN auf das präparierte Blech (1) aufgetragen wird.

16. Verfahren nach einem der Ansprüche 12 bis 15, **dadurch gekennzeichnet, dass** bei der Bildung der Verschleißschutzschicht (2) ein amorphes, diamantähnliches Kohlenstoffmaterial DLC auf das präparierte Blech (1) aufgetragen wird.

17. Verfahren nach einem der Ansprüche 12 bis 16, **dadurch gekennzeichnet, dass** die Verschleißschutzschicht (2) durch Anwendung eines galvanischen Auftragverfahrens, eines Schmelztauchverfahrens, eines Metall-Spritzüberzugverfahrens, insbesondere Flammspritzverfahrens, Lackierverfahrens oder/und Diffusionsüberzugverfahrens, auf das präparierte Blech (1) aufgetragen wird.

18. Verfahren nach einem der Ansprüche 12 bis 17, **dadurch gekennzeichnet, dass** das Laderaumbegrenzungsblech ein Bodenblech für einen Lastentransportbehälter eines Lastentransportfahrzeuges ist.

19. Verfahren zur Herstellung eines Laderaumbegrenzungsbleches eines Lastentransportbehälters für ein Lastentransportfahrzeug, **dadurch gekennzeichnet, dass** das Laderaumbegrenzungsblech aus einem Schichtverbundblechmaterial mit einer zähelastischen Basisschicht (1) und einer Verschleißschutzschicht (2) zugeschnitten oder/und vorgeformt wird.

20. Verfahren nach Anspruch 19, **dadurch gekennzeichnet, dass** ein Schichtverbundblechmaterial aus wenigstens zwei flächig, insbesondere durch Plattieren, Aufwalzen oder Verkleben miteinander verbundenen Blechen verwendet wird, wobei das die Verschleißschutzschicht (2) bildende Blech eine kleinere Blechdicke hat als das die Basisschicht (1) bildende Blech.

21. Verfahren nach Anspruch 20, **dadurch gekennzeichnet, dass** das die Basisschicht (1) bildende Blech aus einem kalt verformbaren Baustahl besteht und dass das die Verschleißschutzschicht (2) bildende Blech aus einem hochfesten Stahl besteht.
